# FASCICULE DE BREVET EUROPEEN

(11) **EP 0 640 292 B1**
(45) Date de publication et mention de la délivrance du brevet: **08.10.1997**
(21) Numéro de dépôt: 93110636.3
(22) Date de dépôt: 03.07.1993
(51) Int. Cl.: A23K 1/18, A23K 1/10, A23L 1/052

(54) **Composition hétérogène pour alimentation animale**
Heterogene Zusammensetzung für Tierfutter
Heterogeneous animal feed composition

(43) Date de publication de la demande: 01.03.1995
(73) Titulaire: SOCIETE DES PRODUITS NESTLE S.A., 1800 Vevey (CH)
(72) Inventeur: Bussiere, Michel, F-80480 Salouel (FR); Fournet, Gaston, F-1807 Blonay (CH); Vanacker, Pascal, F-80370 Villers Bretonneux (FR)
(74) Mandataire: Thomas, Alain

(56) Documents cités:
- EP-A- 0 018 153
- EP-A- 0 050 006
- EP-A- 0 185 511
- DE-A- 3 714 361
- GB-A- 1 537 209
- GB-A- 2 219 803
- DATABASE WPI Week 8530, Derwent Publications Ltd., London, GB; AN 85-181395 & JP-A-60 110 270

## Description

L'invention concerne une composition hétérogène pour alimentation animale à teneur en eau supérieure à 82% à base de viande ou de poisson.

Les compositions actuelles connues pour alimentation animale ont en général une teneur en eau inférieure à 82%. Il existe à l'heure actuelle une tendance à augmenter la teneur en eau dans les compositions en boîte pour les animaux domestiques tels que chats et chiens. Si on augmente simplement la teneur en eau, on obtient un produit suintant non satisfaisant sur le plan commercial. Pour pallier à cet inconvénient, on peut alors augmenter la teneur en gélifiants. Mais ceci a un effet négatif sur la texture du produit final obtenu et renchérit le coût.

Le but de la présente invention est de mettre au point une composition hétérogène pour animaux domestiques, dans laquelle on obtient un produit ayant une cosmétique acceptable, ayant une texture compatible dans le domaine considéré et qui permet d'augmenter la teneur en eau sans qu'elle soit perceptible.

La composition hétérogène selon la présente invention contient entre 2 et 15% d'éclats solides de dimension comprise entre 2 et 10 mm à teneur en eau supérieure à 95% contenant au moins un gélifiant. Tous les pourcentages mentionnés dans la présente description sont en poids.

Cette composition est à base de viandes ou de poissons. Par base viandes dans la présente description on entend des viandes broyées ou micro broyées (mousse) ou ces mêmes viandes, auxquelles on a ajouté des morceaux naturels ou reconstitués (terrine). La base poissons répond à la même définition. Par viandes, on entend des viandes de volailles, lapins, bovins ou ovins, des abats ou des carcasses broyées. Par abats, on entend aussi bien des lobes de poumons, que des foies ou des rognons.

Les éclats solides sont uniformément répartis dans la base viande ou poisson. On a constaté que la dimension des éclats solides devait être comprise entre 2 et 10 mm. Au dessus de 10 mm, on a un aspect visuel négatif.

De manière particulière, la composition selon l'invention contient environ 10% d'éclats solides et a une teneur en eau comprise entre 82 et 85%.

Ces éclats solides ont une teneur en eau supérieure à 97%, le reste étant un gélifiant choisi parmi le K-carraghénane seul, le K-carraghénane en mélange avec un galactomannane, le gellane et un alginate.

Le but est d'obtenir un gel ayant une force suffisante pour permettre la découpe. Le galactomannane est choisi parmi la gomme de tara, la caroube et la farine de cassia.

La composition selon l'invention est normalement stérilisée.

L'invention concerne en outre le procédé d'obtention de la composition décrite ci-dessus, dans lequel on mélange à une température comprise entre 15 et 95°C l'eau avec le gélifiant, on traite le mélange pendant une durée comprise entre 5 et 15 min. à une température comprise entre 25 et 95°C, on refroidit à une température comprise entre 4 et 25° C, on cube le gel obtenu, on mélange les cubes avec la base de viande ou de poisson et on stérilise.

Le gélifiant est choisi d'une part pour obtenir une préparation rapide pour son hydratation (c'est-à-dire de l'ordre de 10 min. à 90-95°C), d'autre part pour avoir une force en gel élevée et finalement pour que ledit gel ait une bonne tenue à la stérilisation dans une terrine ou dans une mousse, car il n'est pas en général thermoirréversible.

On utilise dans le procédé selon l'invention les gélifiants déjà mentionnés ci-dessus, qui permettent de satisfaire aux trois exigences qui viennent d'être citées.

On mélange le gélifiant à l'eau à raison de 0,25 à 3% en poids. On mélange de préférence à raison de 0,5 à 2%.

Pour certains gélifiants, il est nécessaire, pour que la gélification s'effectue, d'ajouter des sels minéraux, par exemple KCl et CaCl₂. C'est-à-dire que dans le cas de K-carraghénane on ajoute du KCl et dans le cas de gellane du CaCl₂.

Le mélange eau-gélifiant est normalement traité à 95°C pendant 10 min.

On refroidit entre 4 et 25°C en une durée comprise entre 1,5 et 4h.

Le cubage se fait avec un dispositif connu, par exemple une cubeuse Urschel, de manière à obtenir des cubes ayant une dimension de 2 à 10 mm.

C'est vraiment avec la teneur en éclats solides comprise entre 5 et 15% que le gel supporte le mieux la stérilisation subséquente.

La base viande ou poisson a normalement une teneur en humidité comprise entre 70 et 80%.

La stérilisation est effectuée de manière classique à une température comprise entre 110 et 140°C pendant 10 à 55 min.

Le procédé selon l'invention est mis en oeuvre de manière discontinue.

La suite de la description est faite en référence aux exemples.

### Exemples 1 à 5

| gélifiants utilisés | |
|---|---|
| Ex. 1 | 1,5% K-carraghénane raffiné |
| Ex. 2 | 2% K-carraghénane semi-raffiné |
| Ex. 3 | 1,6% K-carraghénane semi-raffiné |
| | 0,4% gomme de tara |
| Ex. 4 | 1,6% K-carraghénane semi-raffiné |
| | 0,4% farine de caroube |
| Ex. 5 | 0,5% gellane |

On effectue dans les 4 premiers exemples une dispersion à froid et on chauffe pendant 10 min. à 95°C en présence de 0,1 à 0,3% de KCl. Pour l'exemple 5, on incorpore le gellane à chaud (95°C) ainsi que 0,2% de CaCl₂ et on reste à cette température pendant environ 10 min.

On refroidit ensuite le gel à 12°C en 30 minutes et on cube de manière à obtenir des éclats d'environ 5 mm de côté.

On mélange 10% d'éclats dans une base viande (90%) à base de foie et de poumon et on stérilise le tout à 140°C pendant 5 min.

Le produit final a une teneur en eau de 83,5%, une bonne texture et est bien accepté par les chats auxquels il a été proposé.

### Exemple 6

Le gellane est dispersé dans de l'eau froide (0,5%) contenant 0.1% de citrate de sodium. Le mélange est chauffé à 95°C pendant 10 mn. Un sel de calcium est ajouté (CaCl₂, 0,1% à 0,25%) à cette température. Dès la dissolution de ce sel, on refroidit la solution suivant les conditions des exemples 1 à 5.

Le gel refroidi dans ces conditions est incorporé dans une base viande comme dans les exemples précités.

## Revendications

1. Composition hétérogène à teneur en eau supérieure à 82% à base de viande ou de poisson, caractérisée en ce qu'elle contient 5 à 15% d'éclats solides de dimension comprise entre 2 et 10 mm à teneur en eau supérieure à 95% contenant au moins un gélifiant.

2. Composition hétérogène selon la revendication 1, caractérisée en ce qu'elle contient environ 10% d'éclats solides.

3. Composition hétérogène selon l'une des revendications 1 ou 2, caractérisée en ce qu'elle a une teneur en eau comprise entre 82 et 85%.

4. Composition selon l'une des revendications 1 à 3, caractérisée en ce que les éclats solides ont une teneur en eau supérieure à 97%.

5. Composition selon l'une des revendications 1 à 4, caractérisée en ce que les éclats solides contiennent comme gélifiant un composé choisi parmi le K-carraghénane seul, le K-carraghénane en mélange avec un galactomannane, le gellane et l'alginate.

6. Composition selon la revendication 5, caractérisé en ce que le galactomannane est choisi parmi la gomme de tara, la caroube et la farine de cassia.

7. Procédé d'obtention d'une composition selon l'une quelconque des revendications 1 à 6 caractérisé en ce qu'on mélange à température comprise entre 15 et 95°C l'eau avec le gélifiant, on traite le mélange pendant une durée comprise entre 5 et 15 min. à une température comprise entre 25 et 95°C, on refroidit à une température comprise entre 4 et 25°C, on cube le gel obtenu, on mélange les cubes avec la base de viande ou de poisson et on stérilise.

8. Procédé selon la revendication 7, caractérisé en ce qu'on mélange l'eau avec 0,25 à 3% de gélifiant.

9. Procédé selon l'une des revendications 7 ou 8, caractérisé en ce qu'on découpe le gel pour obtenir des cubes ayant une dimension de 2 à 10 mm.

10. Procédé selon l'une des revendications 7 à 9, caractérisé en ce qu'on mélange 85 à 95% de base viande ou poisson avec 5 à 15% de cubes.

11. Procédé selon l'une des revendications 7 à 10, caractérisé en ce qu'on stérilise à une température comprise entre 110 et 140°C.

## Claims

1. Heterogeneous meat- or fish-based composition with a water content above 82 %, characterized in that it contains 5 to 15 % of solid pieces between 2 to 10 mm in size with a water content greater than 95 % containing at least one gelling agent.

2. Heterogeneous composition according to claim 1, characterized in that it contains approximately 10 % of solid pieces.

3. Heterogeneous composition according to claim 1 or 2, characterized in that it has a water content of between 82 % and 85 %.

4. Composition according to one of claims 1 to 3, characterized in that the solid pieces have a water content above 97 %.

5. Composition according to one of claims 1 to 4, characterized in that the solid pieces contain as a gelling agent a compound selected from K-carrageenin on its own, K-carrageenin mixed with a galactomannan, gellane and alginate.

6. Composition according to claim 5, characterized in that the galactomannan is selected from tara gum, carob and cassia flour.

7. Process for obtaining a composition according to any one of claims 1 to 6, characterized in that water is mixed with the gelling agent at a temperature of between 15 and 95°C, the mixture is treated for a period of between 5 and 15 min at a temperature of between 25 and 95°C and is then cooled to a temperature of between 4 and 25°C, the gel obtained is diced, the cubes are mixed with the meat or fish base and the whole is sterilized.

8. Process according to claim 7, characterized in that water is mixed with 0.25 to 3 % of gelling agent.

9. Process according to claim 7 or 8, characterized in that the gel is cut up to obtain cubes from 2 to 10 mm in size.

10. Process according to one of claims 7 to 9, characterized in that 85 to 95 % of meat or fish base are mixed with 5 to 15 % of cubes.

11. Process according to one of claims 7 to 10, characterized in that sterilization is carried out at a temperature of between 110 and 140°C.

## Patentansprüche

1. Heterogene Zusammensetzung auf Fleisch- oder Fischgrundlage mit einem Wassergehalt über 82 %, dadurch gekennzeichnet, daß sie 5 bis 15 % mindestens ein Geliermittel enthaltende feste Stücke mit einer Größe von 2 bis 10 mm und einem Wassergehalt über 95 % enthält.

2. Heterogene Zusammensetzung nach Anspruch 1, dadurch gekennzeichnet, daß sie etwa 10 % feste Stücke enthält.

3. Heterogene Zusammensetzung nach einem der Ansprüche 1 und 2, dadurch gekennzeichnet, daß sie einen Wassergehalt von 82 bis 85 % hat.

4. Zusammensetzung nach einem der Ansprüche 1 bis 3, dadurch gekennzeichnet, daß die festen Stücke einen Wassergehalt über 97 % haben.

5. Zusammensetzung nach einem der Ansprüche 1 bis 4, dadurch gekennzeichnet, daß die festen Stücke als Geliermittel eine Zusammensetzung enthalten, die aus K-Carrageenan allein, K-Carrageenan in Mischung mit einem Galactomannan, Gellan und Alginat ausgewählt ist.

6. Zusammensetzung nach Anspruch 5, dadurch gekennzeichnet, daß das Galactomannan aus Taragummi, Johannisbrot und Cassiamehl ausgewählt ist.

7. Verfahren zur Herstellung einer Zusammensetzung nach einem der Ansprüche 1 bis 6, dadurch gekennzeichnet, daß man bei einer Temperatur von 15 bis 95 °C Wasser mit Geliermittel mischt, die Mischung während einer Zeit von 5 bis 15 min mit einer Temperatur von 25 bis 95 °C behandelt, auf eine Temperatur von 4 bis 25 °C kühlt, das erhaltene Gel würfelt, die Würfel mit der Fleisch- oder Fischgrundlage mischt und sterilisiert.

8. Verfahren nach Anspruch 7, dadurch gekennzeichnet, daß man Wasser mit 0,25 bis 3% Geliermittel mischt.

9. Verfahren nach einem der Ansprüche 7 und 8, dadurch gekennzeichnet, daß man das Gel schneidet, um Würfel mit einer Abmessung von 2 bis 10 mm zu erhalten.

10. Verfahren nach einem der Ansprüche 7 bis 9, dadurch gekennzeichnet, daß man 85 bis 95 % Fleisch- oder Fischgrundlage mit 5 bis 15 % Würfeln mischt.

11. Verfahren nach einem der Ansprüche 7 bis 10, dadurch gekennzeichnet, daß man bei einer Temperatur von 110 bis 140 °C mischt.
